# EUROPÄISCHE PATENTANMELDUNG

(11) **EP 0 916 857 A2**
(43) Veröffentlichungstag der Anmeldung: **19.05.1999**
(21) Anmeldenummer: 98117927.8
(22) Anmeldetag: 22.09.1998
(51) Int. Cl.: F16C 3/20

(54) **Kurbelwelle für eine mehrzylindrige Hubkolbenmaschine, insbesondere Brennkraftmaschine**

(30) Priorität: 12.11.1997 DE 19750032
(71) Anmelder: Bayerische Motoren Werke Aktiengesellschaft, 80788 München (DE)
(72) Erfinder: Kerzendorf, Gerhard, 85551 Kirchheim (DE)

(57) **Zusammenfassung**

Für eine Kurbelwelle (1) für eine mehrzylindrige Hubkolbenmaschine, insbesondere Brennkraftmaschine, mit zu einem Grundlager beiderseits benachbart unter einem Winkel > 0 und < 180° versetzt angeordneten Hubzapfen (3) mit an den Kurbelwangen (4) angeordneten Gegengewichten (5) wird zur Massenreduzierung der Kurbelwelle vorgeschlagen, daß die Gegengewichte derart massenreduziert ausgebildet und in Richtung der verlängerten Winkelhalbierenden zwischen versetzten Hubzapfen geschwenkt an der jeweiligen Kurbelwange angeordnet sind, daß ihre resultierende Massenkraft auf der verlängerten Winkelhalbierenden gleich ist einer resultierenden Massenkraft von üblicherweise gestalteten Gegengewichten.

## Beschreibung

Die Erfindung bezieht sich nach dem Oberbegriff des Anspruches 1 auf eine Kurbelwelle für eine mehrzylindrige Hubkolbenmaschine, insbesondere Brennkraftmaschine, umfassend Grundlager mit zumindest zwei zueinander um einen Winkel "β" > 0° und < 180° versetzte Hubzapfen, deren jeweilige mit einem gemeinsamen Grundlager verbundene Kurbelwangen mit Gegengewichten ausgerüstet sind derart, daß die gegengewichtsseitig aus Kurbelwangen und Gegengewichten wirksamen Massenkräfte auf einer jenseits der Drehachse des Grundlagers in Richtung der Gegengewichte verlängerten Winkelhalbierenden des Winkels "β" eine am Grundlager radial wirksame resultierende "R" bilden.

Derartige Kurbelwellen sind allgemeiner Stand der Technik bei Drei-, Fünf-, Sechs-, Acht-, Zehn- und Zwölf-Zylindermaschinen, wobei die Masse eines Gegengewichtes der Masse des Kurbelarmes einschließlich anteiligem Hubzapfen sowie anteiliger rotierender Masse des Pleuels entspricht. Zur Reduzierung der Masse einer gattungsgemäßen Kurbelwelle kann gemäß der DE-A 37 41 636 der jeweilige Kurbelarm bzw. die jeweilige Kurbelwange lediglich bis Mitte Hubzapfen vorgesehen sein, so daß mit diesem Endfall an Masse an der Kurbelwange im Hubzapfenbereich auch eine geringere Masse für das Gegengewicht dieser Kurbelwange erzielt ist. Neben dieser radial vorgesehenen Massenreduktion an einer Kurbelwelle ist es aus der DE-C 873 180 weiter bekannt, an einer gattungsfremden Kurbelwelle mit scheibenförmiger Kurbelwange eine Massenreduzierung in axialer Richtung vorzusehen.

Der Erfindung liegt die Aufgabe zugrunde, für eine gattungsgemäß gestaltete Kurbelwelle einen weiteren Weg für eine Massenreduzierung einer Kurbelwelle aufzuzeigen, die ferner auch an bereits ausgeführten Schmiede- oder Guß-Kurbelwellen nachträglich anwendbar ist.

Diese Aufgabe ist mit dem Patentanspruch 1 dadurch gelöst, daß die Gegengewichte derart massenreduziert ausgebildet und in Richtung der verlängerten Winkelhalbierenden derart geschwenkt an der jeweiligen Kurbelwange angeordnet sind, daß mit den gegengewichtsseitigen, aus jeweiliger Kurbelwange mit massenreduziertem Gegengewicht wirksamen Massenkräften "Pᵣ" auf der verlängerten Winkelhalbierenden eine der resultierenden "R" nach Richtung und Betrag im wesentlichen gleichwertige resultierende "R' " bewirkt ist.

Durch die erfindungsgemäße Kombination von massenreduzierten Gegengewichten beiderseits eines Grundlagers in Verbindung mit einer in Abhängigkeit der Massenreduktion getroffenen Winkellage der massenreduzierten Gegengewichte relativ zur Kurbelwange sind das Gewicht der Kurbelwelle sowie ihr Trägheitsmoment vorteilhaft reduziert.

Eine die Ausbildung der Kurbelwelle in Schmiede- oder Gußausführung vorteilhafte Ausgestaltung der Erfindung ist dadurch erreicht, daß die Gegengewichte in radial diametralen Bereichen derart massenreduziert gestaltet und relativ zur verlängerten Winkelhalbierenden derart auf diese zugeschwenkt an der jeweiligen Kurbelwange angeordnet sind, daß die jeweiligen Schwerpunkte jeder Kurbelwange mit massereduziertem Gegengewicht auf der verlängerten Winkelhalbierenden angeordnet sind.

Zwar ist aus der FR-C 648 430 eine Kurbelwelle für einen Sechs-Zylindermotor bekannt, bei der die Gegengewichte so angeordnet sind, daß ihr Schwerpunkt auf einem von der Verbindungslinie zwischen Hubzapfen und Grundlager um 30° versetzten Schenke liegt, jedoch sind Hubzapfen mit derartigen Gegengewichten auf halber Kurbelwellenlänge derart zueinander angeordnet, daß sich die Massenkräfte der winkelversetzten Gegengewichte diametral und damit außerhalb des Hubzapfen-Versatzwinkels "β" ausgleichen. Zweck dieser bekannten Kurbelwellen-Gestaltung ist die Herstellbarkeit dieser Kurbelwelle im Schmiedeverfahren ohne Massenreduktion.

Demgegenüber bietet die vorbeschriebene Ausgestaltung der Erfindung mit einer Massenreduktion der Gegengewichte in radial diametralen Bereichen den Vorteil einer erheblichen Gewichtsreduzierung sowie einer einfachen Durchführung der Massenreduktion auch an bereits ausgeführten Kurbelwellen. Grundsätzlich ist die erfindungsgemäße Gewichtserleichterung bzw. Massenreduktion bei jeder Kurbelwelle mit beiderseits eines Grundlagers angeordneten Kurbelwangen für zueinander winkelversetzt angeordnete Hubzapfen anwendbar, insbesondere bei den in der Beschreibungseinleitung bereits erwähnten mehrzylindrigen Hubkolben- und Brennkraftmaschinen.

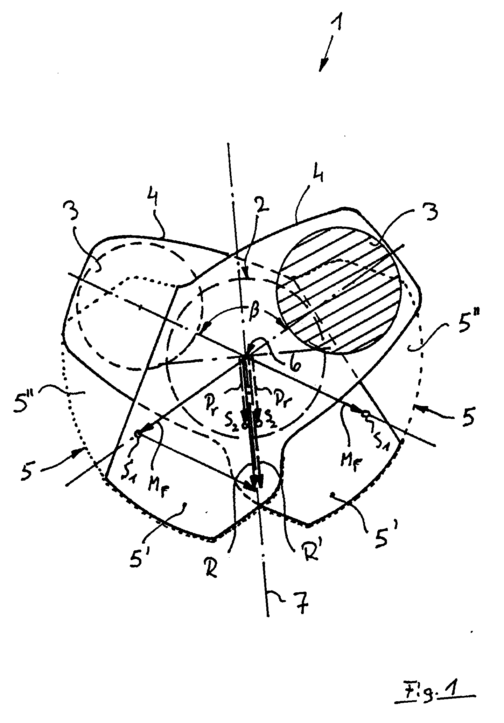

Die Erfindung ist anhand eines in der Zeichnung dargestellten Beispiels beschrieben. Es zeigt
- Figur 1: in Achsrichtung der Kurbelwelle gesehen zwei zueinander winkelversetzte Hubzapfen beiderseits eines gemeinsamen Grundlagers mit erfindungsgemäß gestalteten Gegengewichten sowie durch Punktlinien angedeutete Gegengewichte nach dem Stand der Technik, und

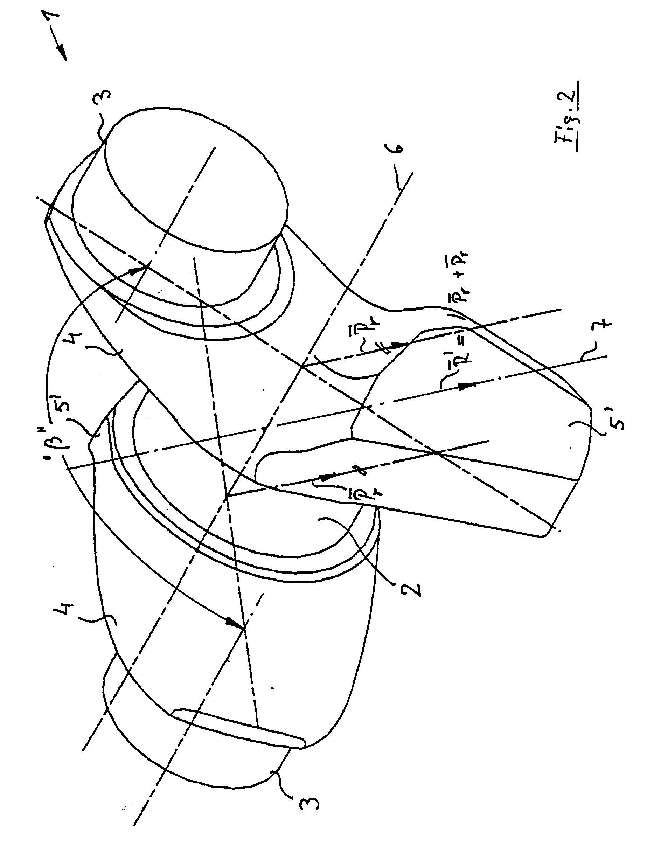

- Figur 2: die in Figur 1 aufgezeigte Kurbelwellenanordnung in perspektivischer Ansicht mit massereduzierten Gegengewichten.

Eine Kurbelwelle 1 für eine beispielsweise sechszylindrige, nicht gezeigte Brennkraftmaschine umfaßt ein Grundlager 2 mit zumindest zwei zueinander um einen Winkel "β" = 120° versetzte Hubzapfen 3, deren jeweilige mit dem gemeinsamen Grundlager 2 verbundene Kurbelwangen 4 mit durch punktierte Linien angedeuteten Gegengewichten 5 nach dem Stand der Technik ausgerüstet sind derart, daß die gegengewichtsseitig aus Kurbelwangen 4 und Gegengewichten 5 wirksamen Massenkräfte Mᵣ auf einer jenseits der Drehachse 6 des Grundlagers 2 in Richtung der Gegengewichte 5 verlängerten Winkelhalbierenden 7 des Winkels "β" eine am Grundlager 2 radial wirksame resultierende "R" bilden.

Für eine wirksame Gewichts- bzw. Massenreduzierung der Kurbelwelle 1 sind erfindungsgemäß die Gegengewichte 5' derart massenreduziert ausgebildet und in Richtung der verlängerten Winkelhalbierenden 7 derart geschwenkt an der jeweiligen Kurbelwange angeordnet, daß mit den gegengewichtsseitigen, aus jeweiliger Kurbelwange 4 mit massereduziertem Gegengewicht 5' wirksamen Massenkräften "Pᵣ" auf der verlängerten Winkelhalbierenden 7 eine der resultierenden "R" nach Richtung und Betrag im wesentlichen gleichwertige resultierende "R'" bewirkt ist.

Eine hinsichtlich der Gewichtsreduzierung unter Beibehaltung des bisherigen Bauraumes der Kurbelwelle 1 vorteilhafte Ausgestaltung ist ferner dadurch erzielt, daß die Gegengewichte 5' in radial diametralen Bereichen 5'' bzw. mit in Drehrichtung bzw. gegen Drehrichtung angeordneten Seitenbereichen 5'' derart massereduziert gestaltet und relativ zur verlängerten Winkelhalbierenden 7 derart auf diese zugeschwenkt an der jeweiligen Kurbelwange 4 angeordnet sind, daß die jeweiligen Schwerpunkte S2 jeder Kurbelwange 4 mit massereduziertem Gegengewicht 5' auf der verlängerten Winkelhalbierenden 7 angeordnet sind.

Die erfindungsgemäße Massenreduzierung ist sowohl für Schmiede- als auch für Guß-Kurbelwellen 1 anwendbar.

Weiter ist die erfindungsgemäße Massenreduzierung auch bei einer gegebenen Kurbelwelle 1 mit herkömlich gestalteten Gegengewichten 5 anwendbar, wobei mit der Massenreduzierung an den herkömmlichen Gegengewichten 5 in erfindungsgemäß radial diametralen Bereichen 5'' ein weiterer Vorteil dadurch gegeben ist, daß bei der Entfernung ausreichend großer Bereiche 5'' die gemeinsamen Schwerpunkte von jeweiliger Kurbelwange 4 und jeweiligem reduziertem Gegengewicht 5' nahe oder auf der verlängerten Winkelhalbierenden 7 zu liegen kommen und somit eine gesonderte Änderung der Winkellage des massereduzierten Gegengewichtes 5' entfällt.

Die erfindungsgemäße Massenreduzierung ist für Kurbelwellen 1 geeignet, deren zu einem Grundlager 2 unmittelbar benachbart angeordnete Hubzapfen 3 einen Winkel einschließen, der einerseits > 0 ist und der andererseits < 180° ist, wie dies insbesondere für Drei-, Fünf-, Sechs-, Acht-, Zehn- und Zwölf-Zylindermaschinen gegeben ist.

## Patentansprüche

1. Kurbelwelle für eine mehrzylindrige Hubkolbenmaschine, insbesondere Brennkraftmaschine
- umfassend Grundlager (2) mit zumindest zwei zueinander um einen Winkel "β >0° und < 180° (0°>β<180°) versetzte Hubzapfen (3), deren
- jeweilige mit einem gemeinsamen Grundlager (2) verbundene Kurbelwangen (4) mit Gegengewichten (5, 5') ausgerüstet sind derart, daß
- die gegengewichtsseitig aus Kurbelwangen (4) und Gegengewichten (5, 5') wirksamen Massenkräfte (Mᵣ) auf einer jenseits der Drehachse (6) des Grundlagers (2) in Richtung der Gegengewichte (5, 5') verlängerten Winkelhalbierenden (7) des Winkels "β" eine am Grundlager (2) radial wirksame resultierende "R" bilden,
dadurch gekennzeichnet,
- daß die Gegengewichte (5') derart massenreduziert ausgebildet und in Richtung der verlängerten Winkelhalbierenden (7) derart geschwenkt an der jeweiligen Kurbelwange (4) angeordnet sind, daß
- mit den gegengewichtsseitigen, aus jeweiliger Kurbelwange (4) mit massereduziertem Gegengewicht (5') wirksamen Massenkräften "Pᵣ" auf der verlängerten Winkelhalbierenden (7) eine der resultierenden "R' " nach Richtung und Betrag im wesentlichen gleichwertige resultierende "R' " bewirkt ist.

2. Kurbelwelle nach Anspruch 1, dadurch gekennzeichnet,
- daß die Gegengewichte (5') in radial diametralen Bereichen (5'') derart massereduziert gestaltet und relativ zur verlängerten Winkelhalbierenden (7) derart auf diese zugeschwenkt an der jeweiligen Kurbelwange (4) angeordnet sind, daß
- die jeweiligen Schwerpunkte (S₂) jeder Kurbelwange (4) mit massereduziertem Gegengewicht (5') auf der verlängerten Winkelhalbierenden (7) angeordnet sind.

3. Kurbelwelle nach Anspruch 1 oder 2, dadurch gekennzeichnet,
- daß bei einer gegebenen Kurbelwelle (1) mit jeweils eine resultierende "R" bewirkenden Gegengewichten (5) an mit einem Grundlager (2) verbundenen Kurbelwangen (4) deren Gegengewichte (5) nachträglich in diametralen Bereichen (5'') derart massenreduziert sind, daß
- eine Anordnung der neuen Gesamt-Schwerpunkte (S₂) der Kurbelwangen (4) und der massereduzierten Gegengewichte (5') auf der verlängerten Winkelhalbierenden (7) erzielt ist.

4. Kurbelwelle nach einem der Ansprüche 1 bis 3, gekennzeichnet durch die Verwendung für Drei-, Fünf-, Sechs-, Acht-, Zehn- und Zwölf-Zylindermaschinen.
